# EUROPEAN PATENT SPECIFICATION

(11) **EP 2 402 606 B1**
(45) Date of publication and mention of the grant of the patent: **09.04.2014**
(21) Application number: 10745817.6
(22) Date of filing: 11.02.2010
(51) Int. Cl.: F04B 27/08, F04B 39/00, C09D 171/08, C09D 181/06, C09D 7/12, C09D 5/00

(54) **SELF-LUBRICATING WEAR-RESISTANT COATING SWASH PLATE AND THE PRODUCTION PROCESS THEREOF**
TAUMELSCHEIBE MIT SELBSTSCHMIERENDER ABRIEBFESTER BESCHICHTUNG UND HERSTELLUNGSVERFAHREN DAFÜR
PLATEAU CYCLIQUE DOTÉ D'UN REVÊTEMENT AUTOLUBRIFIANT ET RÉSISTANT À L'USURE ET SON PROCÉDÉ DE PRODUCTION

(30) Priority: 26.02.2009 CN 200910095953
(43) Date of publication of application: 04.01.2012
(73) Proprietor: Zhejiang Changsheng Sliding Bearings Co., Ltd, Jiaxing, Zhejiang 314100 (CN)
(72) Inventor: SUN, Zhihua, Zhejiang 314100 (CN)
(74) Representative: advotec.
(86) International application number: PCT/CN2010/070646
(87) International publication number: WO 2010/097033

(56) References cited:
- EP-A1- 1 548 067
- EP-A1- 1 813 663
- EP-A1- 1 967 573
- EP-A2- 1 489 152
- CN-A- 1 641 003
- CN-A- 101 503 995
- CN-Y- 201 236 782
- JP-A- 2002 036 902
- JP-A- 2006 152 274
- US-A- 6 123 009
- US-A- 6 123 009
- US-A1- 2005 257 684

## Description

### Technical Field

The present invention relates to a swash plate of swash plate type compressor in automobile air conditioner and a process for producing the same. More specifically, the present invention relates to a swash plate for improving the lubrication and antifriction properties between the swash plate and the slipper of automobile air conditioner compressor. The technical fields associated with the present invention comprise a swash plate type compressor, a swash plate sliding layer having a composite structure, a polymeric self-lubricating material and the like.

### Background of the Invention

The working principle for a swash plate type compressor in automobile air conditioner consists in driving the reciprocating movement of a piston of a compressor by the means of the rotation of a swash plate fixed aslant on a rotational axis, thereby realizing the inhalation, compression and discharge of refrigerant. It is just the relative sliding of slipper for the piston on the swash plate that allows the rotation motion of swash plate to convert to the reciprocating movement of the piston.

The sliding of swash plate is **characterized in that**, at the initial stage of the movement of the compressor and before the arrival of the lubricant, a gaseous refrigerant has reached the respective parts of the swash plate and the slipper, and rinsed the lubricant still retained on the sliding surface. Therefore, during a short period after start-up of the compressor, the swash plate and the slipper is slid relative to each other under a dry friction condition without a lubricant.

In about 1 minute from the moment that the gaseous refrigerant begins to form an oil mist with the lubricant entering the compressor, the swash plate and the slipper of the compressor are in a non-lubricating or deficient-lubricating state. The swash plate operated under such conditions must have the properties of abrasion-resistance, anti-seizure and self-lubricating.

With respect to the working characteristics of the swash plate described above, there are various technical solutions in the art as exemplified below.

Taiho Kogyo Co.,Ltd. of Japan (Chinese patent publication No. CN1321220A) discloses a copper-aluminium plated swash plate and the technical solution thereof comprises plating a layer of copper-lead-aluminium-silicon onto the working surface of the swash plate, so as to achieve the anti-friction and anti-seizure properties. However, the material thereof contains a relatively large amount of lead which is harmful to the human body and has been forbidden to be used or strictly controlled in the usage amount thereof in most of the countries.

Sanden Behr Automotive Air Conditioning Co., Ltd. Shanghai (Chinese patent application No.200310109214.4) discloses a Ni60+20%WC thermal spraying swash plate and the technical solution thereof comprises thermally spraying a layer of Ni60+20%WC alloy onto the working surface of the swash plate, so as to achieve the anti-friction and anti-seizure properties. Sanden Behr Automotive Air Conditioning CO., LTD, Shanghai (Chinese patent application No.200710040291.7) discloses a zinc-aluminum alloy swash plate reinforced with silicon carbide (SiC) particles and the technical solution thereof comprises thermal spraying or sintering a layer of zinc-aluminium alloy onto the working surface of the swash plate. Sanden Behr Automotive Air Conditioning Co., Ltd., Shanghai (Chinese patent application No.200310108606.9) discloses a swash plate in which the wearable layer is made of the mixture of poly(ether ether ketone) (PEEK) and a lubricating material, and the technical solution thereof comprises thermal spraying or sintering an interlayer of nickel-cadmium alloy onto the working surface of the swash plate and then laying a layer of material formed by mixing poly(ether ether ketone) (PEEK) and a lubricating material. Toyota Automatic Loom Co., Ltd. of Japan (Chinese patent publication No. CN 1401898A) discloses a thermoplastic polyimide coating swash plate comprising a solid lubricant, and the technical solution thereof comprises electrostatically spraying a polyimide (PI) powder layer containing the solid lubricant and forming a coating by fusing the powder via heating. The swash plate can be provided with abrasion resistance and anti-seizure as well as the self-lubricating properties to some extent by employing the above technical solutions. However, all of them are suffered from the complicated processes and relatively high costs.

Currently, since the refrigerants such as Freon would be replaced in order to protect the ozonosphere of the atmosphere, carbon dioxide as the refrigerant in the air conditioner compressor has received extensive attention. Compared with the compressor using Freon as the refrigerant, the load exerted by the carbon dioxide compressor on the swash plate via the action of piston is larger, which makes the working conditions for the sliding friction more severe. Therefore, there is a need for a self-lubricating wearable coating swash plate with improved performances.

The working principle for a swash plate type compressor in automobile air conditioner consists in driving the reciprocating movement of a piston of a compressor by the means of the rotation of a swash plate fixed aslant on a rotational axis, thereby realizing the inhalation, compression and discharge of refrigerant. It is just the relative sliding of slipper for the piston on the swash plate that allows the rotation motion of swash plate to convert to the reciprocating movement of the piston.

The sliding of swash plate is **characterized in** that, at the initial stage of the movement of the compressor and before the arrival of the lubricant, a gaseous refrigerant has reached the respective parts of the swash plate and the slipper, and rinsed the lubricant still retained on the sliding surface. Therefore, during a short period after start-up of the compressor, the swash plate and the slipper is slid relative to each other under a dry friction condition without a lubricant.

In about 1 minute from the moment that the gaseous refrigerant begins to form an oil mist with the lubricant entering the compressor, the swash plate and the slipper of the compressor are in a non-lubricating or deficient-lubricating state. The swash plate operated under such conditions must be with the characteristics of abrasion-resistance, anti-seizure and self-lubricating.

With respect to the working characteristics of the swash plate described above, there are various technical solutions in the art as exemplified below.

Taiho Kogyo Co., Ltd. of Japan (Chinese patent publication No. CN1321220A) discloses a copper-Aluminum plated swash plate and the technical solution thereof comprises plating a layer of copper-lead-Aluminum-silicon onto the working surface of the swash plate, so as to achieve the anti-friction and anti-seizure properties. However, the material thereof contains a relatively large amount of lead which is harmful to the human body and has been forbidden to be used or strictly controlled in the usage amount thereof in most of the countries.

Sanden Behr Automotive Air Conditioning Co., Ltd., Shanghai (Chinese patent application No.200310109214.4) discloses a Ni60+20%WC thermal spraying swash plate and the technical solution thereof comprises thermally spraying a layer of Ni60+20%WC alloy onto the working surface of the swash plate, so as to achieve the anti-friction and anti-seizure properties. Sanden Behr Automotive Air Conditioning Co., Ltd., Shanghai (Chinese patent application No.200710040291.7) discloses a zinc-aluminum alloy swash plate reinforced with silicon carbide (SiC) particles and the technical solution thereof comprises thermal spraying or sintering a layer of zinc-Aluminum alloy onto the working surface of the swash plate. Sanden Behr Automotive Air Conditioning Co., Ltd. Shanghai (Chinese patent application No.200310108606.9) discloses a swash plate in which the wearable layer is made of the mixture of poly(ether ether ketone) (PEEK) and a lubricating material, and the technical solution thereof comprises thermal spraying or sintering an interlayer of nickel-cadmium alloy onto the working surface of the swash plate and then laying a layer of material formed by mixing poly(ether ether ketone) (PEEK) and a lubricating material. Toyota Automatic Loom Co., Ltd. Of Japan (Chinese patent publication No. CN 1401898A) discloses a thermoplastic polyimide coating swash plate comprising a solid lubricant, and the technical solution thereof comprises electrostatically spraying a polyimide (PI) powder layer containing the solid lubricant and forming a coating by fusing the powder via heating. The swash plate can be provided with abrasion resistance and anti-seizure as well as the self-lubricating properties to some extent by employing the above technical solutions. However, all of them are suffered from the complicated processes and relatively high costs.

EP-A-1813663, US-A-20050257684, EP-A-1489152 and JP-A-2006152274 disclose a self-lubricating wearable coating swash plate, consisting of a metallic substrate and a self-lubricating wearable coating. EP-A-1548067 and EP-A-1967573 also disclose a swash plate using inorganic material for the coating. None of the cited documents provides a technical solution to the below mentioned technical problems.

Currently, since the refrigerants such as Freon would be replaced in order to protect the ozonosphere of the atmosphere, carbon dioxide as the refrigerant in the air conditioner compressor has received extensive attention. Compared with the compressor using Freon as the refrigerant, the load exerted by the carbon dioxide compressor on the swash plate via the action of piston is larger, which makes the working conditions for the sliding friction more severe. Therefore, there is a need for a self-lubricating wearable coating swash plate with improved performances.

### Disclosure of the Invention

### Technical Problems

An object of the invention is to design a self-lubricating wearable coating swash plate and a process for producing the same, which can provide a swash plate with superior performances used in the swash plate type compressor in automobile air conditioner and meanwhile reduce the production cost by the inventive process.

The problems to be solved by the invention are those in the existing swash plates, such as poor self-lubricating, complicated processes, high production cost, pollution of lead contained in the coating materials used, and the like.

### Technical solutions

To solve the problems above, the present invention provides the following technical solutions.

A self-lubricating wearable coating swash plate according to present claim 1.

### Advantageous Effects

1. The main material of the swash plate coating is consisted of polyphthalazinone ether sulfone (PPES), polyphthalazinone ether ketone (PPEK) and/or polyphthalazinone ether sulfoneketone (PPESK), and both the self-lubricating and abrasion-resistant properties of the swash plate of the invention are superior to those of the current swash plates due to the inherent high-strength, thermal resistance, abrasion resistance and erosion resistance of the main materials, plus with the self-lubricating properties of the filled fluoroplastic and solid lubricant as well as the abrasion resistance of the filled inorganic material.
2. The wearable layer does not contain lead which is harmful to the human body and the environment, and thus meeting the requirement of future environmental protection and lead-free development of the automobile parts.
3. The process for producing the swash plate is simple and low-cost.

### Brief Description of the Drawings

Figure 1 shows the schematic view of the overall structure for the swash plate type compressor in automobile air conditioner according to the present invention; and
Figure 2 shows the schematic cross-sectional view of the self-lubricating wearable coating swash plate according to the present invention.

### Preferred Embodiments of the Invention

The invention will be further described in detail hereinafter with reference to drawings and exemplary embodiments.

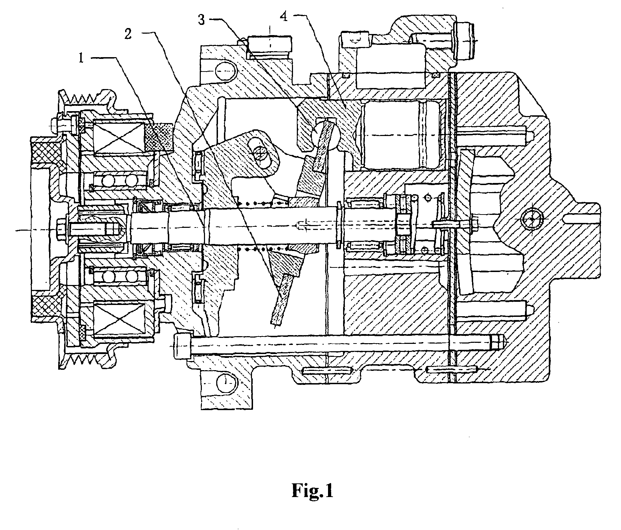

Figure 1 shows the schematic view of the structure for the swash plate type compressor in automobile air conditioner according to the present invention. The working principle for a swash plate type compressor in automobile air conditioner consists in by the rotation of a swash plate 2 fixed aslant on a rotational axis 1, driving the reciprocating movement of a piston 4 of a compressor, thereby realizing the inhalation, compression and discharge of refrigerant. It is just the relative sliding of slipper 3 for the piston on the swash plate 2 that allows the rotation motion of swash plate 2 to convert to the reciprocating movement of piston 4.

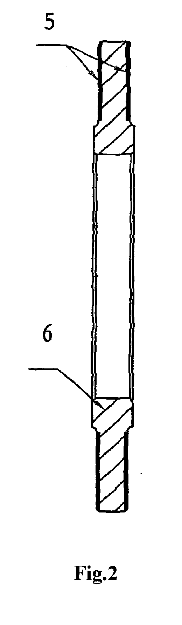

The present invention will now be described in more detail with reference to Figure 2. The self-lubricating wearable coating swash plate according to the present invention consists of a metallic substrate 6 (metallic body) and a self-lubricating wearable coating 5. The metallic substrate 6 is made of, for example, iron-based metals or alloys thereof, copper-based metals or alloys thereof, aluminum-based metals or alloys thereof, and/or zinc-based metals or alloys thereof. The metallic substrate 6 is manufactured into swash plate metallic substrate 6 by mechanical processing methods. The self-lubricating wearable coating 5 is bonded to the annular plane at both sides of the swash plate metallic substrate 6 by the means of brush-coating or spray-coating and the like, to form the self-lubricating wearable coating swash plate. The self-lubricating wearable coating 5 constitutes the annular plane working layer of the swash plate.

The self-lubricating wearable coating 5 comprises polymer material as the main material, fluoroplastic, solid lubricant and inorganic material.

The polymer material is at least one material selected from the group consisting of polyphthalazinone ether sulfone (PPES), polyphthalazinone ether ketone (PPEK) and polyphthalazinone ether sulfoneketone (PPESK). In the self-lubricating wearable coating 5, the content of polyphthalazinone ether sulfone (PPES) is controlled within the range of 0-55% by weight, the content of polyphthalazinone ether ketone (PPEK) is controlled within the range of 0-40% by weight, and the content of polyphthalazinone ether sulfoneketone (PPESK) is controlled within the range of 0-15% by weight.

The fluoroplastic is at least one material selected from the group consisting of polytetrafluoroethene (PTFE), perfluorinated ethylene-propylene tetrafluoroethylene-hexafluoropropylene (FEP), tetrafluoroethylene-perfluoroalkoxy vinyl ether copolymer (PFA), polyvinylidene fluoride (PVDF), ethylene-tetrafluoroethylene copolymer (ETFE) and ethylene-chlorotrifluoroethylene copolymer (EDTFE). In the self-lubricating wearable coating 5, the content of polytetrafluoroethene (PTFE) is controlled within the range of 0-40% by weight, the content of perfluorinated ethylene-propylene tetrafluoroethylene-hexafluoropropylene (FEP) is controlled within the range of 0-10% by weight, the content of tetrafluoroethylene perfluoroalkoxy vinyl ether copolymer (PFA) is controlled within the range of 0-5% by weight, the content of polyvinylidene fluoride (PVDF) is controlled within the range of 0-5% by weight, the content of ethylene-tetrafluoroethylene copolymer (ETFE) is controlled within the range of 0-5% by weight, and the content of ethylene-chlorotrifluoroethylene copolymer (EDTFE) is controlled within the range of 0-5% by weight.

The solid lubricant is at least one material selected from the group consisting of tungsten disulfide (WS₂), molybdenum disulfide (MoS₂), graphite (C), boron nitride (BN) and calcium fluoride (CaF₂). In the self-lubricating wearable coating 5, the content of tungsten disulfide (WS₂) is controlled within the range of 0-8% by weight, the content of molybdenum disulfide (MoS₂) is controlled within the range of 0-8% by weight, the content of graphite (C) is controlled within the range of 0-5% by weight, the content of boron nitride (BN) is controlled within the range of 0-5% by weight, and the content of calcium fluoride (CaF₂) is controlled within the range of 0-5% by weight.

The wearable inorganic material is at least one material selected from the group consisting of silicon carbide (SiC), titanium dioxide (TiO₂), silica (SiO₂) and alumina (Al₂O₃). In the self-lubricating wearable coating 5, the content of silicon carbide (SiC) is controlled within the range of 0-3% by weight, the content of titanium dioxide (TiO₂) is controlled within the range of 0-3% by weight, the content of silica (SiO₂) is controlled within the range of 0-3% by weight, and the content of alumina (Al₂O₃) is controlled within the range of 0-3% by weight.

A process for production of the self-lubricating wearable coating swash plate is characterized in that the self-lubricating wearable coating 5 is formed by applying a liquid coating which is formulated by firstly dissolving the polymer main material into a solvent of N-methyl-pyrrolidone or dimethylethanamide, then adding the fluoroplastic, the solid lubricant and the wearable inorganic material followed by adequate stirring and dispersion, and thereby forming the coating with a certain solid content. To improve the bonding strength between the swash plate metallic substrate 6 and the self-lubricating wearable coating 5, the metallic substrate 6 requires to be subjected to surface treatment processes such as sandblasting and/or phosphating. The self-lubricating wearable coating 5 is bonded to the annular plane at both sides of the swash plate metallic substrate 6 by the means of brush-coating or spray-coating, then heated to 200°C and maintained at that temperature for 3 hours, thereafter dried by vaporizing the solvent sufficiently; again heated to 380°C and maintained at that temperature for 1 hour so as to subject to solidifying and sintering treatments, thereby producing the self-lubricating wearable coating 5, in which after natural cooling, the self-lubricating wearable coating 5 appears a fusing state at the surface bonded to the metallic substrate 6. The self-lubricating wearable coating 5 on the annular plane at both sides of the metallic substrate 6 is finally subjected to precise processing after sintering, in which the thickness of single side thereof is controlled within the range of 0.01-0.1 mm and the parallelism for both the sides of the self-lubricating wearable coating 5 is controlled within 0.01 mm.

The present invention will be further illustrated in conjunction with the particular examples. It should be understood that these examples are merely used to illustrate the present invention without limiting the scope thereof. The experimental processes in which the particular conditions are not specified in the following examples are usually carried out under the usually conditions or under the conditions suggested by the manufacturers. All of the parts are parts by weight and all of the percentages are percentages by weight, unless otherwise indicated.

### Examples

### Example 1

The self-lubricating wearable coating consists of 40% of polyphthalazinone ether ketone (PPEK), 40% of polyphthalazinone ether sulfoneketone (PPESK), 5% of polytetrafluoroethene (PTFE), 5% of perfluorinated ethylene-propylene tetrafluoroethylene-hexafluoropropylene (FEP), 4% of tungsten disulfide (WS₂), 4% of molybdenum disulfide (MoS₂), 1% of alumina (Al₂O₃) and 1% of titanium dioxide (TiO₂). The coating which is formulated by using N-methyl-pyrrolidone as the solvent is applied onto the swash plate metallic substrate 6. It is dried and sintered in an oven, and then processed by turning and grinding to obtain a coating 5 with a thickness of 0.02-0.04 mm.

### Example 2

The coating of the self-lubricating wearable coating consists of 38% of polyphthalazinone ether ketone (PPEK), 38% of polyphthalazinone ether sulfoneketone (PPESK), 6% of polytetrafluoroethene (PTFE), 6% of perfluorinated ethylene-propylene tetrafluoroethylene-hexafluoropropylene (FEP), 5% of tungsten disulfide (WS₂), 5% of molybdenum disulfide (MoS₂), 1% of silicon carbide (SiC) and 1% of alumina (Al₂O₃). The coating which is formulated by using N-methyl-pyrrolidone as the solvent is applied onto the swash plate metallic substrate 6. It is dried and sintered in an oven, and then processed by turning and grinding to obtain a coating 5 with a thickness of 0.02-0.04 mm.

### Example 3

The coating of the self-lubricating wearable coating consists of 40% of polyphthalazinone ether ketone (PPEK), 40% of polyphthalazinone ether sulfone (PPES), 5% of polyvinylidene fluoride (PVDF), 5% of perfluorinated ethylene-propylene tetrafluoroethylene-hexafluoropropylene (FEP), 4% of tungsten disulfide (WS₂), 4% of molybdenum disulfide (MoS₂), 1% of silicon carbide (SiC) and 1% of titanium dioxide (TiO₂). The coating which is formulated by using N-methyl-pyrrolidone as the solvent is applied onto the swash plate metallic substrate 6. It is dried and sintered in an oven, and then processed by turning and grinding to obtain a coating 5 with a thickness of 0.02-0.04 mm.

### Example 4

The coating of the self-lubricating wearable coating consists of 40% of polyphthalazinone ether ketone (PPEK), 40% of polyphthalazinone ether sulfone (PPES), 5% of polyvinylidene fluoride (PVDF), 5% of perfluorinated ethylene-propylene tetrafluoroethylene-hexafluoropropylene (FEP), 4% of graphite (C), 4% of molybdenum disulfide (MoS₂), 1% of silicon carbide (SiC) and 1% of alumina (Al₂O₃). The coating which is formulated by using N-methyl-pyrrolidone as the solvent is applied onto the swash plate metallic substrate 6. It is dried and sintered in an oven, and then processed by turning and grinding to obtain a coating 5 with a thickness of 0.02-0.04 mm.

To indicate the advantages in the performance for the above examples of the present invention by comparing with other materials, it is particularly chosen that the specimen is prepared by substituting polyphthalazinone ether ketone (PPEK) and polyphthalazinone ether sulfoneketone (PPESK) in example 1 for polyimide (PI) or polyether ether ketone (PEEK), with the same contents of other materials in the formulation as following:

### Comparative example 1

The coating of the self-lubricating wearable coating consists of 80% of polyimide (PI), 5% of polytetrafluoroethene (PTFE), 5% of perfluorinated ethylene-propylene tetrafluoroethylene-hexafluoropropylene (FEP), 4% of tungsten disulfide (WS₂), 4% of molybdenum disulfide (MoS₂), 1% of alumina (Al₂O₃) and 1% of titanium dioxide (TiO₂). The mixed materials are applied onto the swash plate metallic substrate by electrostatic spraying. It is dried and sintered in an oven, and then processed by turning and grinding to obtain a coating with a thickness of 0.02-0.04 mm.

### Comparative example 2

The coating of the self-lubricating wearable coating consists of 80% of polyether ether ketone (PEEK), 5% of polytetrafluoroethene (PTFE), 5% of perfluorinated ethylene-propylene tetrafluoroethylene-hexafluoropropylene (FEP), 4% of tungsten disulfide (WS₂), 4% of molybdenum disulfide (MoS₂), 1% of alumina (Al₂O₃) and 1% of titanium dioxide (TiO₂). The mixed coating is applied onto the swash plate metallic substrate after formulating. It is dried and sintered in an oven, and then processed by turning and grinding to obtain a coating with a thickness of 0.02-0.04 mm.

The friction properties of the examples and comparative examples described above were examined by MMU-12 type friction and wear test machine for face-face contact. The specimen size was 37×37×5 mm (length×width×thickness), and the test conditions were as follows: the unit load, 5MPa; the linear velocity, 1.3 m/s; dry friction; friction couple, 40 Cr; quenching hardness, HRC58-60; and the test set time, 120 min. The particular abrasion data were summarized in the following table:

| | Abrasion loss (µm) | Actual test time (min) |
|---|---|---|
| Example 1 | 12 | 120 |
| Example 2 | 14 | 120 |
| Example 3 | 18 | 120 |
| Example 4 | 16 | 120 |
| Comparative example 1 | 30 | 58 |
| Comparative example 2 | 28 | 36 |

It can be seen from the above data that a coating having a thickness of about 30 µm was substantially worn off in less than 60 min for both the products in the comparative examples, which renders the test have to be stop, while the products of the present invention has a better friction property so that the test for 120 min can be completed, and the abrasion loss is relatively low.

The abrasion resistance and seizure resistance test for the coating of the swash plate would be illustrated below. The test was performed on special test equipment by fixing the swash plate. The surfaces of three semi-balls of steel with a diameter of 12 mm were used as the friction couple to slide on the swash plate. The test conditions were as follows: the load between the friction couple and the swash plate, 5 N/mm²; the relative movement speed for the friction couple and the swash plate, 3.35 m/s; and dry friction. The time required for the coating of the swash plate to be completely worn off and thereby leading to the seizure between the friction couple and the swash plate was measured. The results for the comparative test were listed in the following table:

| | Time required for the seizure (min) |
|---|---|
| Example 1 | 180 |
| Example 2 | 175 |
| Example 3 | 162 |
| Example 4 | 170 |
| Comparative example 1 | 78 |
| Comparative example 2 | 42 |

It can be seen from the above data that the seizure between the friction couple and the swash plate was taken place in less than 80 min for both the products in the comparative examples, i.e. the coating was substantially worn off, which renders the test have to be stop, while the products of the present invention has a better abrasion resistance and seizure resistance with all the anti-seizure time more than 160 min.

## Claims

1. A self-lubricating wearable coating swash plate, consisting of a metallic substrate and a self-lubricating wearable coating, **characterized in that** the annular surface at both sides of the metallic substrate is coated with the self-lubricating wearable coating, in which the self-lubricating wearable coating constitutes the annular plane working layer of the swash plate; the self-lubricating wearable coating comprises polymer material as main material, fluoroplastic, solid lubricant and inorganic material, wherein the polymer material is at least one selected from the group consisting of polyphthalazinone ether sulfone (PPES), polyphthalazinone ether ketone (PPEK) and polyphthalazinone ether sulfoneketone (PPESK), in which the content of polyphthalazinone ether sulfone (PPES) is controlled within the range of 0-55% by weight; the content of polyphthalazinone ether ketone (PPEK) is controlled within the range of 0-40% by weight; and the content of polyphthalazinone ether sulfoneketone (PPESK) is controlled within the range of 0-15% by weight in the self-lubricating wearable coating.

2. The self-lubricating wearable coating swash plate according to claim 1, **characterized in that** the fluoroplastic is at least one selected from the group consisting of polytetrafluoroethene (PTFE), perfluorinated ethylene-propylene tetrafluoroethylene-hexafluoropropylene (FEP), tetrafluoroethylene perfluoroalkoxy vinyl ether copolymer (PFA), polyvinylidene fluoride (PVDF), ethylene-tetrafluoroethylene copolymer (ETFE) and ethylene-chlorotrifluoroethylene copolymer (EDTFE), in which the content of polytetrafluoroethene (PTFE) is controlled within the range of 0-40% by weight; the content of perfluorinated ethylene-propylene tetrafluoroethylene-hexafluoropropylene (FEP) is controlled within the range of 0-10% by weight; the content of tetrafluoroethylene perfluoroalkoxy vinyl ether copolymer (PFA) is controlled within the range of 0-5% by weight; the content of polyvinylidene fluoride (PVDF) is controlled within the range of 0-5% by weight; the content of ethylene-tetrafluoroothylone copolymer (ETFE) is controlled within the range of 0-5% by weight; and the content of ethylene-chlorotrifluoroethylene copolymer (EDTFE) is controlled within the range of 0-5% by weight in the self-lubricating wearable coating.

3. The self-lubricating wearable coating swash plate according to claim 1, **characterized in that** the solid lubricant is at least one selected from the group consisting of tungsten disulfide (WS₂), molybdenum disulfide (MoS₂), graphite (C), boron nitride (BN) and calcium fluoride (CaF₂), in which the content of tungsten disulfide (WS₂) is controlled within the range of 0-8% by weight; the content of molybdenum disulfide (MoS₂) is controlled within the range of 0-8% by weight; the content of graphite (C) is controlled within the range of 0-5% by weight; the content of boron nitride (BN) is controlled within the range of 0-5% by weight; and the content of calcium fluoride (CaF₂) is controlled within the range of 0-5% by weight in the self-lubricating wearable coating.

4. The self-lubricating wearable coating swash plate according to claim 1, **characterized in that** the wearable inorganic material is at least one selected from the group consisting of silicon carbide (SiC), titanium dioxide (TiO₂), silica (SiO₂) and alumina (Al₂O₃), in which the content of silicon carbide (SiC) is controlled within the range of 0-3% by weight; the content of titanium dioxide (TiO₂) is controlled within the range of 0-3% by weight; the content of silica (SiO₂) is controlled within the range of 0-3% by weight; and the content of alumina (Al₂O₃) is controlled within the range of 0-3% by weight in the self-lubricating wearable coating.

5. The self-lubricating wearable coating swash plate according to claim 1, **characterized in that** the metallic substrate is selected from iron-based metal or alloys thereof, copper-based metal or alloys thereof, aluminum-based metal or alloys thereof, and zinc-based metal or alloys thereof, and the metallic substrate is manufactured by mechanical processing methods.

## Patentansprüche

1. Taumelscheibe (engl.: *swash plate*) mit selbstschmierender abriebfester Beschichtung, bestehend aus einem metallischen Substrat und einer selbstschmierenden abriebfesten Beschichtung,
**dadurch gekennzeichnet,**
**dass** die ringförmige Fläche an beiden Seiten des metallischen Substrats mit der selbstschmierenden abriebfesten Beschichtung beschichtet ist, wobei die selbstschmierende abriebfeste Beschichtung die ringförmige flächige Arbeitsschicht der Taumelscheibe bildet, die selbstschmierende abriebfeste Beschichtung Polymermaterial als Hauptmaterial, Fluorkunststoff, Festschmierstoff und anorganisches Material umfasst, wobei das Polymermaterial zumindest ein aus der Gruppe umfassend Polyphthalazinonethersulfon (PPES), Polyphthalazinonetherketon (PPEK) und Polyphthalazinonethersulfonketon (PPESK) ausgewähltes Material ist, wobei der Anteil an Polyphthalazinonethersulfon (PPES) in dem Bereich von 0-55 Gew.-% eingestellt ist, der Anteil an Polyphthalazinonetherketon (PPEK) in dem Bereich von 0-40 Gew.-% eingestellt ist, und der Anteil von Polyphthalazinonethersulfonketon (PPESK) in dem Bereich von 0-15 Gew.-% in der selbstschmierenden abriebfesten Beschichtung eingestellt ist.

2. Taumelscheibe mit selbstschmierender abriebfester Beschichtung nach Anspruch 1,
**dadurch gekennzeichnet,**
**dass** der Fluorkunststoff zumindest ein aus der Gruppe umfassend Polytetrafluorethen (PTFE), perfluoriertes Ethylenpropylentetrafluorethylenhexafluorpropylen (FEP), Tetrafluorethylenperfluoralkoxyvinylether-Copolymer (PFA), Polyvinylidenfluorid (PVDF), Ethylentetrafluorethylen-Copolymer (ETFE) und Ethylenchlortrifluorethylen-Copolymer (EDTFE) ausgewählter Fluorkunststoff ist, wobei der Anteil an Polytetrafluorethen (PTFE) in dem Bereich von 0-40 Gew.-% eingestellt ist, wobei der Anteil an perfluoriertem Ethylenpropylentetrafluorethylenhexafluorpropylen (FEP) in dem Bereich von 0-10 Gew.-% eingestellt ist, der Anteil von Tetrafluorethylenperfluoralkoxyvinylether-Copolymer (PFA) in dem Bereich von 0-5 Gew.-% eingestellt ist, der Anteil von Polyvinylidenfluorid (PVDF) in dem Bereich von 0-5 Gew.-% eingestellt ist, der Anteil von Ethylentetrafluorethylen-Copolymer (ETFE) in dem Bereich von 0-5 Gew.-% eingestellt ist, und der Anteil von Ethylenchlortrifluorethylen-Copolymer (EDTFE) in der selbstschmierenden abriebfesten Beschichtung in dem Bereich von 0-5 Gew.-% eingestellt ist.

3. Taumelscheibe mit selbstschmierender abriebfester Beschichtung nach Anspruch 1,
**dadurch gekennzeichnet,**
**dass** das Festschmiermittel zumindest ein aus der Gruppe umfassend Wolframdisulfid (WS₂), Molybdändisulfid (MoS₂), Graphit (C), Bornitrid (BN) und Calciumfluorid (CaF₂) ausgewähltes Festschmiermittel ist, wobei der Anteil von Wolframdisulfid (WS₂) in dem Bereich von 0-8 Gew.-% eingestellt ist, der Anteil von Molybdändisulfid (MoS₂) in dem Bereich von 0-8 Gew.-% eingestellt ist, der Anteil von Graphit (C) in dem Bereich von 0-5 Gew.-% eingestellt ist, der Anteil von Bornitrid (BN) in dem Bereich von 0-5 Gew.-% eingestellt ist, und der Anteil von Calciumfluorid (CaF2) in der selbstschmierenden abriebfesten Beschichtung in dem Bereich von 0-5 Gew.-% eingestellt ist.

4. Taumelscheibe mit selbstschmierender abriebfester Beschichtung nach Anspruch 1,
**dadurch gekennzeichnet,**
**dass** das abriebfeste anorganische Material zumindest ein aus der Gruppe umfassend Siliciumcarbid (SiC), Titandioxid (TiO₂), Siliciumdioxid (SiO₂) und Aluminiumoxid (Al₂O₃) ausgewähltes Material ist, wobei der Anteil an Siliciumcarbid (SiC) in dem Bereich von 0-3 Gew.-% eingestellt ist, der Anteil an Titandioxid (TiO₂) in dem Bereich von 0-3 Gew.-% eingestellt ist, der Anteil an Siliciumdioxid (SiO₂) in dem Bereich von 0-3 Gew.-% eingestellt ist, und der Anteil an Aluminiumoxid (Al₂O₃) in der selbstschmierenden abriebfesten Beschichtung in dem Bereich von 0-3 Gew.-% eingestellt ist.

5. Taumelscheibe mit selbstschmierender abriebfester Beschichtung nach Anspruch 1,
**dadurch gekennzeichnet,**
**dass** das metallische Substrat aus Metall auf Eisenbasis oder dessen Legierungen, Metall auf Kupferbasis oder dessen Legierungen, Metall auf Aluminiumbasis oder dessen Legierungen und Metall auf Zinkbasis oder dessen Legierungen ausgewählt ist, und das metallische Substrat mittels mechanischer Verarbeitungsverfahren hergestellt ist.

## Revendications

1. Plateau cyclique (anglais : *swash plate*) ayant un revêtement autolubrifiant et résistant à l'usure, se composant d'un substrat métallique et d'un revêtement autolubrifiant et résistant à l'usure,
**caractérisé en ce que**
la surface annulaire des deux côtés du substrat métallique est recouverte du revêtement autolubrifiant et résistant à l'usure, le revêtement autolubrifiant et résistant à l'usure constituant la couche de travail annulaire et planaire du plateau cyclique, la couche autolubrifiante et résistante à l'usure comprenant du matériau polymérique comme matériau principal, du fluoroplastique, du lubrifiant solide et du matériau inorganique, le matériau polymérique étant au moins un choisi dans le groupe consistant en polyphthalazinone éther sulfone (PPES), polyphthalazinone éther cétone (PPEK) et polyphthalazinone éther sulfone cétone (PPESK), la teneur en polyphthalazinone éther sulfone (PPES) étant contrôlée dans la gamme de 0-55% en poids, la teneur en polyphthalazinone éther cétone (PPEK) étant contrôlée dans la gamme de 0-40% en poids, et la teneur en polyphthalazinone éther sulfone cétone (PPESK) étant contrôlée dans la gamme de 0-15% en poids dans le revêtement autolubrifiant et résistant à l'usure.

2. Plateau cyclique ayant un revêtement autolubrifiant et résistant à l'usure selon la revendication 1,
**caractérisé en ce que**
le fluoroplastique est au moins un choisi dans le groupe consistant en polytétrafluoroéthène (PTFE), éthylène-propylène tétrafluoroéthlylène-hexafluoropropylène perfluoriné (FEP), un copolymère de tétrafluoroéthylène perfluoroalkoxy vinyle éther (PFA), polyfluorure de vinylidène (PVDF), un copolymère d'éthylène-tétrafluoroéthylène (ETFE) et un copolymère d'éthylènechlorotrifluoroéthylène (EDTFE), la teneur en polytétrafluoroéthène (PTFE) étant contrôlée dans la gamme de 0-40% en poids, la teneur en éthylène-propylène tétrafluoroéthylène-hexafluoropropylène perfluoriné (FEP) étant contrôlée dans la gamme de 0-10% en poids, la teneur en copolymère de tétrafluoroéthylène perfluoroalkoxy vinyle éther (PFA) étant contrôlée dans la gamme de 0-5% en poids, la teneur en polyfluorure de vinylidène (PVDF) étant contrôlée dans la gamme de 0-5% en poids, la teneur en copolymère d'éthylènetétrafluoroéthylène (ETFE) étant contrôlée dans la gamme de 0-5% en poids, et la teneur en copolymère d'éthylènechlorotrifluoroéthylène (EDTFE) étant contrôlée dans la gamme de 0-5% en poids dans le revêtement autolubrifiant et résistant à l'usure.

3. Plateau cyclique ayant un revêtement autolubrifiant et résistant à l'usure selon la revendication 1,
**caractérisé en ce que**
le lubrifiant solide est au moins un choisi dans le groupe consistant en disulfure de tungstène (WS₂), disulfure de molybdène (MoS₂), graphite (C), nitrure de bore (BN) et fluorure de calcium (CaF₂), la teneur en disulfure de tungstène (WS₂) étant contrôlée dans la gamme de 0-8% en poids, la teneur en disulfure de molybdène (MoS₂) étant contrôlée dans la gamme de 0-8% en poids, la teneur en graphite (C) étant contrôlée dans la gamme de 0-5% en poids, la teneur en nitrure de bore (BN) étant contrôlée dans la gamme de 0-5% en poids, et la teneur en fluorure de calcium (CaF₂) étant contrôlée dans la gamme de 0-5% en poids dans le revêtement autolubrifiant et résistant à l'usure.

4. Plateau cyclique ayant un revêtement autolubrifiant et résistant à l'usure selon la revendication 1,
**caractérisé en ce que**
le matériau inorganique résistant à l'usure est au moins un choisi dans le groupe consistant en carbure de silicium (SiC), dioxyde de titane (TiO₂), dioxyde se silicium (SiO₂) et alumine (Al₂O₃), la teneur en carbure de silicium (SiC) étant contrôlée dans la gamme de 0-3% en poids, la teneur en dioxyde de titane (TiO₂) étant contrôlée dans la gamme de 0-3% en poids, la teneur en dioxyde de silicium (SiO₂) étant contrôlée dans la gamme de 0-3% en poids, et la teneur en alumine (Al₂O₃) étant contrôlée dans la gamme de 0-3% en poids dans le revêtement autolubrifiant et résistant à l'usure.

5. Plateau cyclique ayant un revêtement autolubrifiant et résistant à l'usure selon la revendication 1,
**caractérisé en ce que**
le substrat métallique est choisi parmi le métal à base de fer ou ses alliages, le métal à base de cuivre ou ses alliages, le métal à base d'aluminium ou ses alliages, et le métal à base de zinc ou ses alliages, et le substrat métallique est fabriqué par des procédés de traitement mécaniques.
